# EUROPEAN PATENT APPLICATION

(11) **EP 4 852 023 A1**
(43) Date of publication of application: **09.12.2026**
(21) Application number: 25862170.5
(22) Date of filing: 14.07.2025
(51) Int. Cl.: H01B 7/12, H01B 7/14, H01B 7/285, H01B 9/00, H01B 7/40, H01B 13/22, H01B 13/32, G02B 6/44

(54) **SUBMARINE CABLE APPLICABLE TO FLOATING WIND TURBINE, AND PROCESSING METHOD THEREFOR**

(30) Priority: 06.09.2024 CN 202411249120
(71) Applicant: Zhongtian Technology Submarine Cable Co., Ltd., Nantong, Jiangsu 226000 (CN); South Sea Submarine Cable Co., Ltd., Shanwei, Guangdong 516545 (CN); Zhongtian Dafeng Submarine Cable Co., Ltd., Jiangsu 224145 (CN); Jiangsu Zhongtian Technology Co., Ltd., Nantong, Jiangsu 226000 (CN)
(72) Inventor: NIE, Ying, Nantong, Jiangsu 226000 (CN); XUE, Chi, Nantong, Jiangsu 226000 (CN); XIE, Shuhong, Nantong, Jiangsu 226000 (CN); WANG, Liyuan, Nantong, Jiangsu 226000 (CN); ZHANG, Tianyi, Nantong, Jiangsu 226000 (CN); JIANG, Libin, Nantong, Jiangsu 226000 (CN); CHEN, Jie, Nantong, Jiangsu 226000 (CN); LIU, Ligang, Nantong, Jiangsu 226000 (CN); YE, Jinyu, Nantong, Jiangsu 226000 (CN); DING, Xufei, Nantong, Jiangsu 226000 (CN); CHEN, Fan, Nantong, Jiangsu 226000 (CN); CHEN, Ziwei, Nantong, Jiangsu 226000 (CN)
(74) Representative: Boult Wade Tennant LLP
(86) International application number: PCT/CN2025/108379
(87) International publication number: WO 2026/051587

(57) **Abstract**

The present invention provides a submarine cable applicable to floating wind power, and a manufacturing method thereof. The submarine cable applicable to floating wind power includes: a dynamic cable, a static cable and a connector. A first power unit and a first optical fiber unit of the dynamic cable are arranged inside a first inner sheath, and a first armor layer, a second armor layer and a first outer sheath are successively arranged on an outer periphery of the first inner sheath; a second power unit and a second optical fiber unit of the static cable are arranged inside a second inner sheath, and a third armor layer and a second outer sheath are successively arranged on the outer periphery of the second inner sheath; the first power unit and the second power unit are an integral molded component; the first optical fiber unit and the second optical fiber unit are an integral molded component; the first inner sheath and the second inner sheath are an integral molded component; the first armor layer and the third armor layer are an integral molded component; the connector has an accommodating cavity for accommodating a connection portion between the second armor layer and the second outer sheath or accommodating a connection portion between the second armor layer and the third armor layer; the accommodating cavity is filled with a water-blocking adhesive.

## Description

This application claims priority to Chinese Patent Application No. 202411249120.5, filed to China National Intellectual Property Administration on September 06, 2024 and entitled "SUBMARINE CABLE APPLICABLE TO FLOATING WIND POWER, AND MANUFACTURING METHOD THEREOF", the contents of which are hereby incorporated by reference in its entirety.

### TECHNICAL FIELD

The present invention relates to a technical field of submarine cables, and in particular, to a submarine cable applicable to floating wind power, and a manufacturing method thereof.

### BACKGROUND

Typically, offshore floating wind turbines are connected to dynamic cables. However, since floating wind turbines are located in deep and remote offshore waters, using dynamic cables for all export cables results in excessive costs; therefore, a combination configuration of dynamic cables for floating sections and static cables for buried sections is generally employed. There are generally two types of connections between dynamic cables and static cables: one adopts a flexible inline transition joint, and the other adopts a maintenance joint.

To ensure that armored metal wires of the dynamic cables are dry and do not come into contact with seawater, existing flexible transition joints have large sizes to meet their water-blocking performance, which is not conducive to product circulation, transportation, and laying. While maintenance joints have poor bending performance and cannot meet the project requirements for storage and transportation of the entire cable.

### SUMMARY

The present invention provides a submarine cable applicable to floating wind power, and a manufacturing method thereof, aiming to solve the problem in the prior art where transition joints between dynamic cables and static cables have large sizes and poor bending performance, which is not conducive to storage and transportation.

The present invention provides a submarine cable applicable to floating wind power, including: a dynamic cable, including a first power unit, a first optical fiber unit, a first inner sheath, a first armor layer, a second armor layer and a first outer sheath, where the first power unit and the first optical fiber unit are arranged inside the first inner sheath, and the first armor layer, the second armor layer and the first outer sheath are successively arranged on an outer periphery of the first inner sheath;
a static cable, including a second power unit, a second optical fiber unit, a second inner sheath, a third armor layer and a second outer sheath, where the second power unit and the second optical fiber unit are arranged inside the second inner sheath, and the third armor layer and the second outer sheath are successively arranged on an outer periphery of the second inner sheath;
where the first power unit and the second power unit are an integral molded component; the first optical fiber unit and the second optical fiber unit are an integral molded component; the first inner sheath and the second inner sheath are an integral molded component; the first armor layer and the third armor layer are an integral molded component;
a connector, where the connector has an accommodating cavity for accommodating a connection portion between the second armor layer and the second outer sheath or accommodating a connection portion between the second armor layer and the third armor layer; the accommodating cavity is filled with a water-blocking adhesive.

According to the submarine cable applicable to floating wind power according to the present invention, an outer wall surface of the first armor layer close to the third armor layer is coated with the water-blocking adhesive; an outer wall surface of the third armor layer close to the first armor layer is coated with the water-blocking adhesive.

According to the submarine cable applicable to floating wind power according to the present invention, the dynamic cable further includes a first filling unit, the first filling unit is arranged inside the first inner sheath; the static cable further includes a second filling unit, the second filling unit is arranged inside the second inner sheath; the first filling unit and the second filling unit are an integral molded component.

According to the submarine cable applicable to floating wind power according to the present invention, the dynamic cable further includes a first cabling wrapping tape and an reinforcing wrapping tape, the first cabling wrapping tape is arranged inside the first inner sheath, for fixing the first power unit, the first optical fiber unit and the first filling unit; the reinforcing wrapping tape is arranged between the first armor layer and the second armor layer; the static cable further includes a second cabling wrapping tape, the second cabling wrapping tape is arranged inside the second inner sheath for fixing the second power unit, the second optical fiber unit and the second filling unit; the first cabling wrapping tape and the second cabling wrapping tape are an integral molded component.

According to the submarine cable applicable to floating wind power according to the present invention, a side wall of the connector close to the second armor layer is provided with first fixing holes, and the second armor layer is fixedly connected to the connector through the first fixing holes; an side wall of the connector close to the second outer sheath is provided with second fixing holes, the second outer sheath is fixedly connected to the connector through the second fixing holes.

According to the submarine cable applicable to floating wind power according to the present invention, the connector includes a non-metallic layer and a metal layer, the metal layer is arranged on an outer wall surface of the non-metallic layer.

According to the submarine cable applicable to floating wind power according to the present invention, the connector includes a first housing and a second housing, one of the first housing and the second housing has a protruding portion, and the other of the first housing and the second housing has a matching portion, the matching portion and the protruding portion are matched and snap-fitted to form the accommodating cavity.

According to the submarine cable applicable to floating wind power according to the present invention, the first outer sheath and the second outer sheath are an integral molded component.

The present invention also provides a manufacturing method of a submarine cable applicable to floating wind power for manufacturing the submarine cable applicable to the floating wind power as described in any one of the above embodiments. The manufacturing method includes:
continuously forming a power unit, an optical fiber unit, a filling unit, a cabling wrapping tape, an inner sheath and an armor layer, wherein the power unit includes the first power unit and the second power unit, the optical fiber unit includes the first optical fiber unit and the second optical fiber unit, the filling unit includes the first filling unit and the second filling unit, the cabling wrapping tape includes the first cabling wrapping tape and the second cabling wrapping tape, the inner sheath includes the first inner sheath and the second inner sheath, the armor layer includes the first armor layer and the third armor layer;
forming the second armor layer on an outer wall surface of the first armor layer;
forming the second outer sheath on an outer wall surface of the third armor layer, then sleeving the connector onto a connection portion between the second outer sheath and the second armor layer; filling the water-blocking adhesive between the connector and the second armor layer, as well as between the connector and the second outer sheath; forming the first outer sheath on an outer wall surface of the second armor layer and an outer wall surface of the connector;
or, sleeving the connector onto a connection portion between the second armor layer and the third armor layer; filling the water-blocking adhesive between the connector and the second armor layer, as well as between the connector and the third armor layer; forming an outer sheath on the outer wall surface of the second armor layer, the outer wall surface of the third armor layer and the outer wall surface of the connector, wherein the outer sheath includes the first outer sheath and the second outer sheath.

According to the manufacturing method of the submarine cable applicable to floating wind power according to the present invention, before the forming the second armor layer on the outer wall surface of the first armor layer, including: coating the water-blocking adhesive on the outer wall surface of the first armor layer close to the third armor layer and on the outer wall surface of the third armor layer close to the first armor layer.

According to the manufacturing method of the submarine cable applicable to floating wind power according to the present invention, in the case of sleeving the connector onto the connection portion between the second armor layer and the third armor layer, fixing the second armor layer onto the connector; in the case of sleeving the connector onto the connection portion between the second outer sheath and the second armor layer, fixing the second armor layer and the second outer sheath onto the connector.

In the submarine cable applicable to floating wind power, and the manufacturing method thereof, the power units, the optical fiber units, the inner sheaths and the armor layers of the dynamic cable and the static cable, which have the same structures respectively, are configured to be integral molded components respectively, resulting in reduced connections. By connecting the static cable to the second armor layer of the dynamic cable via the connector, and covering the first outer sheath onto the outer peripheries of the second armor layer and the connector, the submarine cable enhances its water-blocking performance, and is small in size and light in weight, which is conducive to production, storage and transportation.

### BRIEF DESCRIPTION OF DRAWINGS

To describe the technical solutions in the present invention or in the prior art more clearly, the following briefly introduces the accompanying drawings needed for describing the embodiments or the prior art. Apparently, the accompanying drawings in the following description illustrate merely some embodiments of the present invention, and persons of ordinary skill in the art may still derive other drawings from these accompanying drawings without creative effort.
FIG. 1 is a schematic structural diagram of a submarine cable applicable to floating wind power in water according to the present invention.
FIG. 2 is a schematic structural diagram of a submarine cable applicable to floating wind power according to the present invention.
FIG. 3 is a schematic cross-sectional diagram of a dynamic cable according to the present invention.
FIG. 4 is a schematic cross-sectional diagram of a static cable according to the present invention.
FIG. 5 is a schematic structural diagram of a connector according to the present invention.
FIG. 6 is a cross-sectional diagram of a connector according to the present invention.
FIG. 7 is a schematic flowchart of a manufacturing method of a submarine cable applicable to floating wind power according to the present invention.

Reference signs:
10: dynamic cable; 11: first power unit; 12: first optical fiber unit; 13: first filling unit; 14: first cabling wrapping tape; 15: first inner sheath; 16: first armor layer; 17: reinforcing wrapping tape; 18: second armor layer; 19: first outer sheath;
20: static cable; 21: second power unit; 22: second optical fiber unit; 23: second filling unit; 24: second cabling wrapping tape; 25: second inner sheath; 26: third armor layer; 27: second outer sheath;
30: connector; 31: first housing; 32: second housing; 33: metal layer; 34: non-metallic layer; 35: first fixing hole; 36: second fixing hole;
40: fixing strap.

### DESCRIPTION OF EMBODIMENTS

To make the objectives, technical solutions, and advantages of the present invention clearer, the following clearly and comprehensively describes the technical solutions in the present invention with reference to the accompanying drawings in the present invention. Apparently, the described embodiments are merely a part rather than all embodiments of the present invention. All other embodiments obtained by persons of ordinary skill in the art based on embodiments of the present invention without creative effort shall fall inside the protection scope of the present invention.

In the description of the embodiments of the present invention, it should be noted that, unless otherwise explicitly specified or limited, the terms "connected", "connection" should be understood in a broad sense. For example, it can be a fixed connection, a detachable connection, or an integrated connection; it can be a mechanical connection or an electrical connection; it can be direct connection, or indirect connection via an intermediate medium. For persons of ordinary skill in the art, the specific meanings of these terms in the embodiments of the present invention can be understood based on the specific circumstances.

In the description of the embodiments of the present invention, it should be noted that orientational or positional relationships indicated by terms such as "center", "longitudinal", "transverse", "up", "down", "front", "back", "left", "right", "vertical", "horizontal", "top", "bottom", "inside", "outside", etc., are based on orientational or positional relationships shown in the accompanying drawings, and are only for ease of description of the embodiments of the present invention and for simplification of the description, and do not indicate or imply that the indicated apparatus or components must have a specific orientation, or be constructed and operated in a specific way. Therefore, it should not be construed as a limitation on the embodiments of the present invention.

In addition, terms "first" and "second" are merely used for descriptive purposes and should not be interpreted as indicating or implying relative importance or implicitly specifying the number of the indicated technical features. Thus, the features limited by "first" and "second" can explicitly or implicitly include one or more of these features. In the description of the present invention, the term "multiple" means two or more, unless otherwise explicitly and specifically defined.

The following describes in detail the embodiments of the present invention, the examples of the embodiments are shown in the accompanying drawings, where the same or similar reference numbers throughout indicate the same or similar components or components having the same or similar functions. The following embodiments described with reference to the accompanying drawings are exemplary and are intended to explain the present invention, rather than limit the present invention.

The disclosure below provides many different embodiments or examples for implementing different structures of the present invention. To simplify the disclosure of the present invention, the components and settings for specific examples are described below. Certainly, they are merely examples and the purpose is not to limit the present invention. Moreover, reference numbers and/or letters in different examples can be repeated in the present invention. This repetition is for the purpose of simplification and clarity, and does not indicate the relationship between various embodiments and/or settings discussed. Moreover, the present invention provides examples of various specific processes and materials, but persons of ordinary skill in the art can realize the applicability of other processes and the use of other materials.

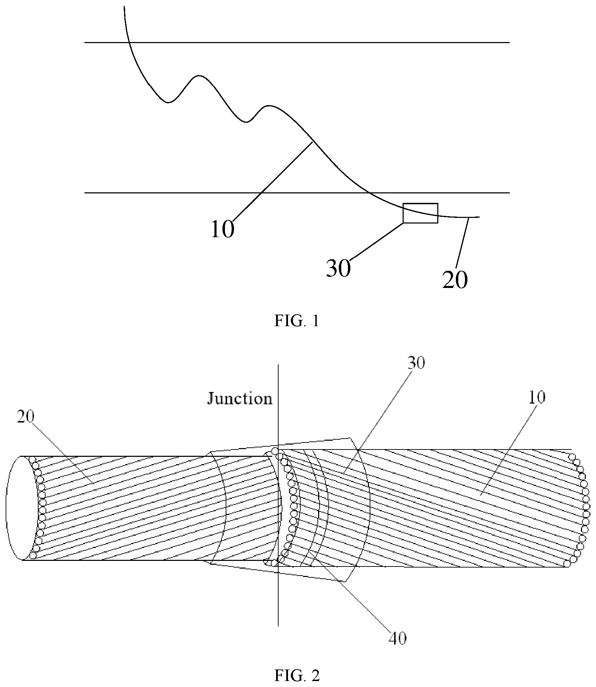

A submarine cable applicable to floating wind power, and a manufacturing method thereof according to the present invention are described below with reference to FIG. 1 to FIG. 7.

An embodiment of the present invention provides a submarine cable applicable to floating wind power, including a dynamic cable 10, a static cable 20 and a connector 30, as shown in FIG. 1.

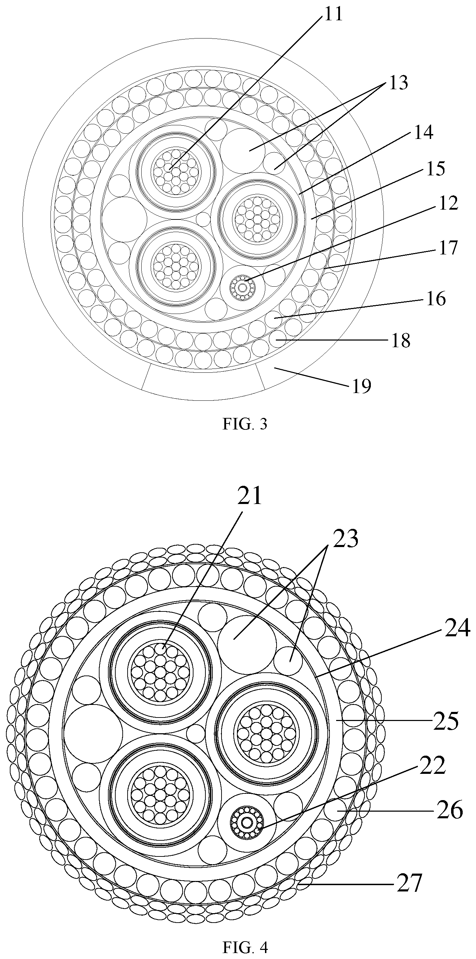

As shown in FIG. 3, a dynamic cable 10 includes a first power unit 11, a first optical fiber unit 12, a first inner sheath 15, a first armor layer 16, a second armor layer 18 and a first outer sheath 19. The first power unit 11 is configured to transmit current. The first optical fiber unit 12 is configured to achieve information transmission and monitoring of the power unit. The first power unit 11 and the first optical fiber unit 12 are arranged on the inner side of the first inner sheath 15. The first inner sheath 15 can be a polyethylene inner sheath, which is configured to protect the first power unit 11 and the first optical fiber unit 12 inside the first inner sheath. The first armor layer 16, the second armor layer 18 and the first outer sheath 19 are arranged successively on the outer periphery of the first inner sheath 15. The first armor layer 16 and the second armor layer 18 play an enhancing role to improve the mechanical performance of the first inner sheath. The first outer sheath 19 is arranged on the outer periphery of the second armor layer 18 and is configured to protect the first armor layer 16 and the second armor layer 18, avoiding them from being corroded by seawater. The first outer sheath 19 can be a sheath. The first armor layer 16 and the second armor layer 18 can be steel wires.

As shown in FIG. 4, the static cable 20 includes a second power unit 21, a second optical fiber unit 22, a second inner sheath 25, a third armor layer 26 and a second outer sheath 27. The second power unit 21 is configured to transmit current. The second optical fiber unit 22 is configured to achieve information transmission. The second power unit 21 and the second optical fiber unit 22 are arranged on the inner side of the second inner sheath 25. The second inner sheath 25 can be a polyethylene inner sheath, which is configured to protect the second power unit 21 and the second optical fiber unit 22 inside the second inner sheath. The third armor layer 26 is arranged on the outer periphery of the second inner sheath 25 and plays a reinforcing role, improving the mechanical performance of the second inner sheath. The second outer sheath 27 is arranged on the outer periphery of the third armor layer 26 and serves to fix the third armor layer 26. The second outer sheath 27 can be a sheath or a PP rope. The third armor layer 26 can be steel wires.

In the embodiment of the present invention, the first power unit 11 and the second power unit 21 have the same structure and size, are an integral molded component, and can be continuously produced. The first optical fiber unit 12 and the second optical fiber unit 22 have the same size, optical fiber model and number of optical fiber units, are an integral molded component, and can be continuously produced. The first inner sheath 15 and the second inner sheath 25 have exactly the same material and size, such as polyethylene inner sheaths, are an integral molded component, and can be continuously produced. The first armor layer 16 and the third armor layer 26 have the same material, structure and number, are an integral molded component, and can be continuously produced. That is, the power units, optical fiber units, inner sheaths, and outer armor layers surrounding the inner sheaths in both the dynamic cable 10 and the static cable 20 of the submarine cable are integral molded components, respectively, and can be continuously manufactured.

Further, in one embodiment, the second armor layer 18 is formed on the outer periphery of the first armor layer 16, and the second outer sheath 27 is formed on the outer periphery of the third armor layer 26. At this time, the connection portion between the second armor layer 18 and the second outer sheath 27 is the connection portion between the dynamic cable 10 and the static cable 20. The connector 30 has an accommodating cavity, and the connector 30 is sleeved on the connection portion between the second armor layer 18 and the second outer sheath 27 to fix the dynamic cable 10 and the static cable 20, as shown in FIG. 2. In the embodiment of the present invention, to prevent seawater from entering between the inner wall surface of the connector 30 and the outer wall surface of the second outer sheath 27 and/or the second armor layer 18, a water-blocking adhesive is filled between the inner wall surface of the connector 30 and the outer wall surface of the second outer sheath 27, and between the inner wall surface of the connector 30 and the outer wall surface of the second armor layer 18 to strengthen the sealing. After completion of this, the first outer sheath 19 is provided, by means of extrusion, on the outer periphery of the second armor layer 18, and the first outer sheath 19 covers the connector 30 and a portion of the second outer sheath 27 close to the connector 30, for example, covering a length of 30mm to 50mm of the second outer sheath 27, thereby providing good sealing.

In another embodiment, the second armor layer 18 is formed on the outer periphery of the first armor layer 16, and the connection portion between the second armor layer 18 and the third armor layer 26 is the connection portion between the dynamic cable 10 and the static cable 20. The connector 30 has an accommodating cavity, and the connector 30 is sleeved on the connection portion between the second armor layer 18 and the third armor layer 26 to fix the dynamic cable 10 and the static cable 20. In the embodiment of the present invention, to prevent seawater from entering between the inner wall surface of the connector 30 and the outer wall surface of the second armor layer 18 and/or the outer wall surface of the third armor layer 26, a water-blocking adhesive is filled between the inner wall surface of the connector 30 and the outer wall surface of the second armor layer 18, and between the inner wall surface of the connector 30 and the outer wall surface of the third armor layer 26 to strengthen the sealing. After completion of this, the first outer sheath 19 and the second outer sheath 27 are provided, by means of extrusion, on the outer peripheries of the second armor layer 18 and the third armor layer 26, respectively. The first outer sheath 19 and the second outer sheath 27 have the same material, and are polyethylene sheaths for example, that is, the first outer sheath 19 and the second outer sheath 27 are an integral molded component, and can be continuously produced. It should be noted that an outer sheath is also provided, by means of extrusion, on the outer periphery of the connector 30. Additionally, when the first outer sheath 19 and the second outer sheath 27 have different materials, they can be formed separately, and the first outer sheath 19 is formed on the outer periphery of the second armor layer 18, and the second outer sheath 27 is formed on the outer periphery of the third armor layer 26.

For the submarine cable applicable to floating wind power in the embodiment of the present invention, the power units, optical fiber units, inner sheaths and armor layers of the dynamic cable 10 and the static cable 20, which have the same structures respectively, are configured to be integral molded components respectively, resulting in reduced connections. By connecting the static cable 20 to the second armor layer 18 of the dynamic cable 10 via the connector 30, and covering the first outer sheath 19 onto the outer peripheries of the second armor layer 18 and the connector 30, the submarine cable enhances its water-blocking performance, and is small in size and light in weight, which is conducive to production, storage and transportation.

In the embodiment of the present invention, in order to improve the water-blocking performance of the submarine cable, after the first armor layer 16 and the third armor layer 26 are continuously produced, the water-blocking adhesive is coated on the outer wall surface of the first armor layer 16 close to the third armor layer 26, such as coating 2500 mm to 3000 mm; the water-blocking adhesive is also coated on the outer wall surface of the third armor layer 26 close to the first armor layer 16, such as coating 2500 mm to 3000 mm; that is, the water-blocking adhesive is coated on both sides of the junction between the dynamic cable 10 and the static cable 20, achieving water-blocking. It should be noted that after the water-blocking adhesive on the outer wall surface of the first armor layer 16 and the outer wall surface of the third armor layer 26 solidifies, the production is continued.

The dynamic cable 10 in an embodiment of the present invention also includes a first filling unit 13, the first filling unit 13 is arranged inside the first inner sheath 15, located between the first optical fiber unit 12 and the first power unit 11, improving the roundness of the cable core of the dynamic cable 10. The static cable 20 also includes a second filling unit 23, the second filling unit 23 is arranged inside the second inner sheath 25, located between the second optical fiber unit 22 and the second power unit 21, improving the roundness of the cable core of the static cable 20. Further, the first filling unit 13 and the second filling unit 23 may have the same material, size and number, may be an integral molded component without connection, and can be continuously produced.

The dynamic cable 10 also includes a first cabling wrapping tape 14, the first cabling wrapping tape 14 is arranged inside the first inner sheath 15 for fixing the first power unit 11, the second power unit 21 and the first filling unit 13. The static cable 20 also includes a second cabling wrapping tape 24, the second cabling wrapping tape 24 is arranged inside the second inner sheath 25 for fixing the second power unit 21, the second optical fiber unit 22 and the second filling unit 23. Further, the first cabling wrapping tape 14 and the second cabling wrapping tape 24 have exactly the same material and size, can be an integral molded component, and can be continuously produced.

The dynamic cable 10 in an embodiment of the present invention also includes a reinforcing wrapping tape 17. The reinforcing wrapping tape 17 is arranged between the first armor layer 16 and the second armor layer 18 to prevent the first armor layer 16 and the second armor layer 18 from coming into contact with each other and causing wear, and thus it serves a protective function.

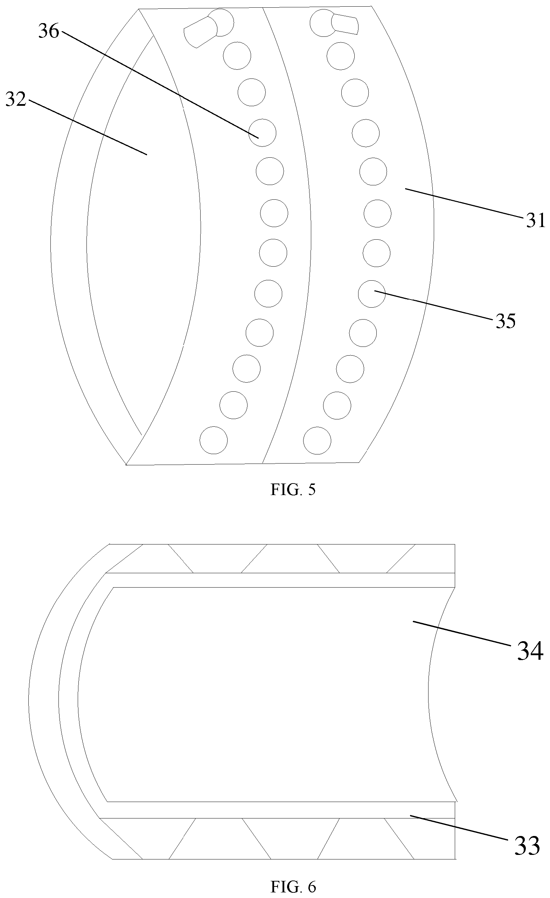

Further, in an embodiment of the present invention, the connector 30 is also provided with first fixing holes 35 and second fixing holes 36. As shown in FIG. 5, the first fixing holes 35 are arranged in the side of the connector 30 close to the second armor layer 18, and the second armor layer 18 can be threaded through the first fixing holes 35 and bent and knotted to be fixedly connected to the connector 30, preventing the second armor layer 18 from moving randomly. Furthermore, a fixing strap 40 is provided around the outer periphery of the second armor layer 18. The fixing strap 40 is configured to fix the position of the second armor layer 18, ensuring that the second armor layer 18 evenly covers the outer periphery of the first armor layer 16. The fixing strap 40 can be used for fixing at a position close to the connector 30. A plurality of fixing straps 40 can be provided, and the plurality of fixing straps 40 are arranged at intervals along an extension direction of the second armor layer 18. The fixing strap 40 in the embodiment of the present invention can be a metal fixing strap 40. The second fixing holes 36 are arranged in the side wall of the connector 30 close to the second outer sheath 27. The second outer sheath 27 can be PP ropes, and the PP ropes can be threaded through the second fixing holes 36 and bent and knotted to be fixedly connected to the connector 30, thereby achieving the connection between the dynamic cable 10 and the static cable 20. Further, the first outer sheath 19 covers the outer wall surface of the second armor layer 18, the outer wall surface of the connector 30, and the outer wall surface of the second outer sheath 27 close to the connector 30, preventing seawater from entering the interior through the second fixing holes 36, and achieving water-blocking.

As shown in FIG. 6, the connector 30 in the embodiment of the present invention has an accommodating cavity with openings on both sides, and is sleeved on the connection portion between the second armor layer 18 and the third armor layer 26. The connector 30 includes a metal layer 33 and a non-metallic layer 34. The metal layer 33 is arranged on the outer wall surface of the non-metallic layer 34, and the non-metallic layer 34 has certain elasticity. Generally, the inner diameter of the non-metallic layer is larger than the maximum cable diameter by 1mm to 2mm. After installation, the non-metallic layer can tightly press against the outer wall surface of the second armor layer 18 to achieve water-blocking. The metal layer 33 provides the required mechanical stress for the connector 30. Further, in the embodiment of the present invention, by using a high elastic non-metallic material for tight pressing and water blocking, followed by sealant injection for sealing, the connector has higher bending performance than that using direct sealant injection, is easy to bend, and can avoid cracking after multiple bends, thereby helping to achieve water blocking.

The connector 30 in the embodiment of the present invention can be a split-type structure. Specifically, as shown in FIG. 5 and FIG. 6, the connector 30 includes a first housing 31 and a second housing 32. One of the first housing 31 and the second housing 32 has a protruding portion, and the other of the first housing 31 and the second housing 32 has a matching portion. The matching portion and the protruding portion are snap-fitted to form the accommodating cavity. In the embodiment of the present invention, the connector 30 is configured to be a detachable component for ease of installation and improvement of production efficiency. Further, a sealant is coated on the connection portion between the first housing 31 and the second housing 32 to strengthen sealing and prevent seawater from entering the interior through the connection portion between the first housing 31 and the second housing 32.

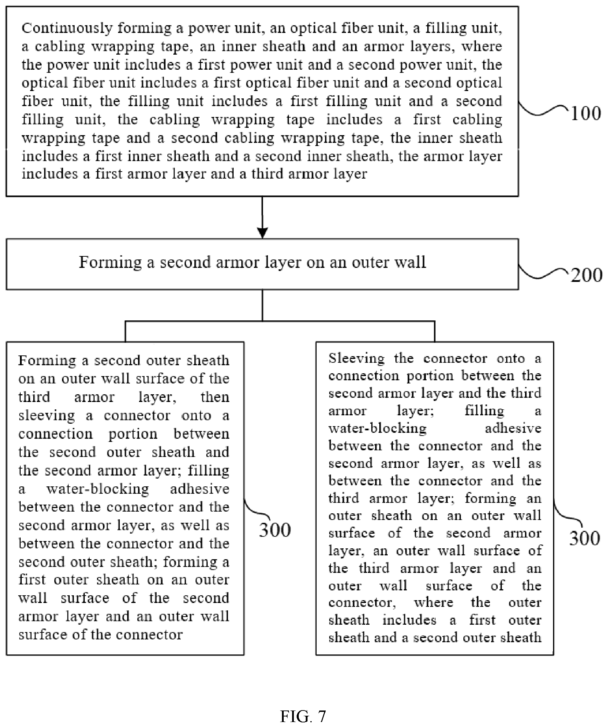

Based on the cable applicable to floating wind power according to any of the above embodiments, an embodiment of the present invention also provides a manufacturing method of a submarine cable applicable to floating wind power. As shown in FIG. 7, the manufacturing method includes: step 100, continuously forming a power unit, optical fiber unit, filling units, cabling wrapping tape, inner sheath and the armor layer, where the power unit includes the first power unit and the second power unit, the optical fiber unit includes the first optical fiber unit and the second optical fiber unit, the filling unit includes the first filling unit and the second filling unit, the cabling wrapping tape includes the first cabling wrapping tape and the second cabling wrapping tape, the inner sheath includes the first inner sheath and the second inner sheath, and the armor layer includes the first armor layer and the third armor layer.

Specifically, the first power unit and the second power unit are continuously formed, and the first power unit and the second power unit are an integral molded component without connection, forming the power unit of the submarine cable for current transmission. The first optical fiber unit and the second optical fiber unit are continuously formed, and the first optical fiber unit and the second optical fiber unit are an integral molded component without connection, forming the optical fiber unit of the submarine cable for information transmission. The first filling unit and the second filling unit are continuously formed, and the first filling unit and the second filling unit are an integral molded component without connection, forming the filling unit of the submarine cable, where the filling unit is located between the optical fiber unit and the power unit for adjusting the roundness of the submarine cable. Further, the first cabling wrapping tape and the second cabling wrapping tape are continuously formed, and the first cabling wrapping tape and the second cabling wrapping tape are an integral molded component without connection, forming the cabling wrapping tape of the submarine cable for fixing the optical fiber unit, power unit and filling unit of the submarine cable. The first inner sheath and the second inner sheath are continuously formed, and the first inner sheath and the second inner sheath are an integral molded component without connection, forming the inner sheath of the submarine cable for protecting the power unit, optical fiber unit and filling unit inside the submarine cable. The first armor layer and the third armor layer are continuously formed, and the first armor layer and the third armor layer are an integral molded component without connection, forming the armor layer of the submarine cable for enhancing mechanical performance.

Further, the armor layer of the submarine cable is coated with a water-blocking adhesive to prevent water from entering through the armor layer to the optical fiber unit and power unit located inside of the submarine cable. Specifically, the water-blocking adhesive is coated on the outer wall surface of the first armor layer close to the third armor layer, such as coating 2500 mm to 3000 mm; and the water-blocking adhesive is coated on the outer wall surface of the third armor layer close to the first armor layer, such as coating 2500 mm to 3000 mm; that is, the water-blocking adhesive is coated on both sides of the junction between the dynamic cable and the static cable, achieving water blocking. It should be noted that after the water-blocking adhesive on the outer wall surface of the first armor layer and the outer wall surface of the third armor layer solidifies, production is continued.

In step 200, the second armor layer is formed on the outer wall surface of the first armor layer.

In step 300, the second armor layer is formed on the outer periphery of the first armor layer, and the second outer sheath is formed on the outer periphery of the third armor layer. At this time, the connection portion between the second armor layer and the second outer sheath is the connection portion between the dynamic cable and the static cable. The connector has an accommodating cavity, and the connector is sleeved on the connection portion between the second armor layer and the second outer sheath to fix the dynamic cable and the static cable. In the embodiment of the present invention, to prevent seawater from entering between the inner wall surface of the connector and the outer wall surface of the second outer sheath and/or second armor layer, a water-blocking adhesive is filled between the inner wall surface of the connector and the outer wall surface of the second outer sheath, and between the inner wall surface of the connector and the outer wall surface of the second armor layer, thereby strengthening the sealing. After completion of this, the first outer sheath is provided, by means of extrusion, on the outer periphery of the second armor layer, and the first outer sheath covers the connector and the portion of the second outer sheath close to the connector, for example, covering a length of 30mm to 50mm of the second outer sheath, thereby providing good sealing.

Further, in the embodiment of the present invention, the connector is also provided with first fixing holes and second fixing holes. As shown in FIG. 5, the first fixing holes are arranged in the side of the connector close to the second armor layer, and the second armor layer can be threaded through the first fixing holes and bent and knotted to be fixedly connected to the connector, preventing the second armor layer from moving randomly. Furthermore, a fixing strap is provided around the outer periphery of the second armor layer. The fixing strap is configured to fix the position of the second armor layer, ensuring that the second armor layer evenly covers the outer periphery of the first armor layer. The fixing strap can be used for fixing at a position close to the connector. A plurality of fixing straps can be provided, and the plurality of fixing straps are arranged at intervals along the extension direction of the second armor layer. The fixing strap in the embodiment of the present invention can be a metal fixing strap. The second fixing holes are arranged in the side wall of the connector close to the second outer sheath, and the second outer sheath can be PP ropes, and the PP ropes can be threaded through the second fixing holes and bent and knotted to be fixedly connected to the connector, thereby achieving the connection between the dynamic cable and the static cable. Further, the first outer sheath is formed on the outer wall surface of the second armor layer, the outer wall surface of the connector, and the outer wall surface of the second outer sheath close to the connector, to prevent seawater from entering the interior through the second fixing holes and achieving water blocking.

In another embodiment, the connector is sleeved on the connection portion between the second armor layer and the third armor layer to fix the dynamic cable and the static cable. It should be noted that the side of the connector close to the second armor layer has first fixing holes, and the second armor layer can be threaded through the first fixing holes and bent and knotted to be fixedly connected to the connector, preventing the second armor layer from moving randomly. Furthermore, a fixing strap is provided around the outer periphery of the second armor layer. The fixing strap is configured to fix the position of the second armor layer, ensuring that the second armor layer evenly covers the outer periphery of the first armor layer. The fixing strap is used for fixing at a position close to the connector. A plurality of fixing straps can be provided, and the plurality of fixing straps are arranged at intervals along the extension direction of the second armor layer. The fixing strap in the embodiment of the present invention can be a metal fixing strap.

Further, to prevent seawater from entering between the inner wall surface of the connector and the outer wall surface of the second armor layer and/or the outer wall surface of the third armor layer, a water-blocking adhesive is filled between the connector and the second armor layer, and between the connector and the third armor layer to strengthen sealing. After completion of this, an outer sheath is formed on the outer wall surface of the second armor layer, the outer wall surface of the third armor layer and the outer wall surface of the connector, where the outer sheath includes the first outer sheath and the second outer sheath. In one embodiment, the first outer sheath and the second outer sheath have the same material, are polyethylene sheaths for example, that is, the first outer sheath and the second outer sheath are an integral molded component, and can be continuously produced. It should be noted that at this time, the outer periphery of the connector is also provided with the outer sheath. In another embodiment, the first outer sheath and the second outer sheath have different material, and they can be formed separately. The first outer sheath can be formed on the outer periphery of the second armor layer, and the second outer sheath can be formed on the outer periphery of the third armor layer. There is an overlapped portion at the junction of the first outer sheath and the second outer sheath on the connector, providing good sealing.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent substitutions to some technical features thereof, without departing from the spirit and scope of the technical solutions of embodiments of the present invention.

## Claims

1. A submarine cable applicable to floating wind power, comprising:
a dynamic cable, comprising a first power unit, a first optical fiber unit, a first inner sheath, a first armor layer, a second armor layer and a first outer sheath, wherein the first power unit and the first optical fiber unit are arranged inside the first inner sheath, and the first armor layer, the second armor layer and the first outer sheath are successively arranged on an outer periphery of the first inner sheath;
a static cable, comprising a second power unit, a second optical fiber unit, a second inner sheath, a third armor layer and a second outer sheath, wherein the second power unit and the second optical fiber unit are arranged inside the second inner sheath, and the third armor layer and the second outer sheath are successively arranged on an outer periphery of the second inner sheath;
wherein the first power unit and the second power unit are an integral molded component; the first optical fiber unit and the second optical fiber unit are an integral molded component; the first inner sheath and the second inner sheath are an integral molded component; the first armor layer and the third armor layer are an integral molded component;
a connector, wherein the connector has an accommodating cavity for accommodating a connection portion between the second armor layer and the second outer sheath or accommodating a connection portion between the second armor layer and the third armor layer; the accommodating cavity is filled with a water-blocking adhesive.

2. The submarine cable applicable to floating wind power according to claim 1, wherein an outer wall surface of the first armor layer close to the third armor layer is coated with the water-blocking adhesive; an outer wall surface of the third armor layer close to the first armor layer is coated with the water-blocking adhesive.

3. The submarine cable applicable to floating wind power according to claim 1, wherein the dynamic cable further comprises a first filling unit, the first filling unit is arranged inside the first inner sheath; the static cable further comprises a second filling unit, the second filling unit is arranged inside the second inner sheath; the first filling unit and the second filling unit are an integral molded component.

4. The submarine cable applicable to floating wind power according to claim 3, wherein the dynamic cable further comprises a first cabling wrapping tape and a reinforcing wrapping tape, the first cabling wrapping tape is arranged inside the first inner sheath for fixing the first power unit, the first optical fiber unit and the first filling unit; the reinforcing wrapping tape is arranged between the first armor layer and the second armor layer;
the static cable further comprises a second cabling wrapping tape, the second cabling wrapping tape is arranged inside the second inner sheath for fixing the second power unit, the second optical fiber unit and the second filling unit;
the first cabling wrapping tape and the second cabling wrapping tape are an integral molded component.

5. The submarine cable applicable to floating wind power according to claim 1, wherein an side wall of the connector close to the second armor layer is provided with first fixing holes, and the second armor layer is fixedly connected to the connector through the first fixing holes; an side wall of the connector close to the second outer sheath is provided with second fixing holes, the second outer sheath is fixedly connected to the connector through the second fixing holes.

6. The submarine cable applicable to floating wind power according to claim 1, wherein the connector comprises a non-metallic layer and a metal layer, the metal layer is arranged on an outer wall surface of the non-metallic layer.

7. The submarine cable applicable to floating wind power according to claim 1, wherein the connector comprises a first housing and a second housing, one of the first housing and the second housing has a protruding portion, and the other of the first housing and the second housing has a matching portion, the matching portion and the protruding portion are matched and snap-fitted to form the accommodating cavity.

8. The submarine cable applicable to floating wind power according to claim 1, wherein the first outer sheath and the second outer sheath are an integral molded component.

9. A manufacturing method of a submarine cable applicable to floating wind power for manufacturing the submarine cable applicable to the floating wind power according to any one of claims 1 to 8, the manufacturing method comprises:
continuously forming a power unit, an optical fiber unit, a filling unit, a cabling wrapping tape, an inner sheath and an armor layer, wherein the power unit comprises the first power unit and the second power unit, the optical fiber unit comprises the first optical fiber unit and the second optical fiber unit, the filling unit comprises the first filling unit and the second filling unit, the cabling wrapping tape comprises the first cabling wrapping tape and the second cabling wrapping tape, the inner sheath comprises the first inner sheath and the second inner sheath, the armor layer comprises the first armor layer and the third armor layer;
forming the second armor layer on an outer wall surface of the first armor layer;
forming the second outer sheath on an outer wall surface of the third armor layer, then sleeving the connector onto a connection portion between the second outer sheath and the second armor layer; filling the water-blocking adhesive between the connector and the second armor layer, as well as between the connector and the second outer sheath; forming the first outer sheath on an outer wall surface of the second armor layer and an outer wall surface of the connector;
or, sleeving the connector onto a connection portion between the second armor layer and the third armor layer; filling the water-blocking adhesive between the connector and the second armor layer, as well as between the connector and the third armor layer; forming an outer sheath on the outer wall surface of the second armor layer, the outer wall surface of the third armor layer and the outer wall surface of the connector, wherein the outer sheath comprises the first outer sheath and the second outer sheath.

10. The manufacturing method of the submarine cable applicable to floating wind power according to claim 9, wherein before the forming the second armor layer on the outer wall surface of the first armor layer, comprising:
coating the water-blocking adhesive on the outer wall surface of the first armor layer close to the third armor layer and on the outer wall surface of the third armor layer close to the first armor layer.

11. The manufacturing method of the submarine cable applicable to floating wind power according to claim 9, wherein in the case of sleeving the connector onto the connection portion between the second armor layer and the third armor layer, fixing the second armor layer onto the connector; in the case of sleeving the connector onto the connection portion between the second outer sheath and the second armor layer, fixing the second armor layer and the second outer sheath onto the connector.
